# EUROPEAN PATENT APPLICATION

(11) **EP 4 353 584 A1**
(43) Date of publication of application: **17.04.2024**
(21) Application number: 22811073.0
(22) Date of filing: 20.04.2022
(51) Int. Cl.: B63H 21/38, B63H 21/14, B63H 21/32, B63J 3/00, C01C 1/12

(54) **SHIP**

(30) Priority: 24.05.2021 JP 2021086832
(71) Applicant: Mitsubishi Shipbuilding Co., Ltd., Yokohama-shi Kanagawa 220-8401 (JP)
(72) Inventor: YAMADA Daisuke, Yokohama-shi, Kanagawa 220-8401 (JP)
(74) Representative: Studio Torta S.p.A.
(86) International application number: PCT/JP2022/018251
(87) International publication number: WO 2022/249799

(57) **Abstract**

A ship includes: an ammonia recovery unit recovering ammonia absorbed into water as recovered ammonia water; a regeneration tower heating the recovered ammonia water and separates the recovered ammonia water into ammonia-removed water and ammonia vapor; a gas-liquid separation unit separating the ammonia vapor separated in the regeneration tower into an ammonia gas and a separated liquid; and a separated liquid reflux unit refluxing the separated liquid to the regeneration tower.

## Description

### Technical Field

The present disclosure relates to a ship.

Priority is claimed on Japanese Patent Application No. 2021-086832, filed May 24, 2021, the content of which is incorporated herein by reference.

### Background Art

Ships equipped with fuel for propelling ships or combustible gas as cargo are provided with vent posts to discharge a combustible gas into the atmosphere outside the ships. For example, Patent Document 1 discloses a configuration in which a combustible gas remaining in a pipe or the like of a gas engine driven by a combustible gas (gas fuel) is purged by a nitrogen gas or the like to be released into the atmosphere through a vent post.

The above-described ship is being considered to be equipped with ammonia as gas fuel. Ammonia may not diffuse sufficiently even if the ammonia is purged with an inert gas and released into the atmosphere through the vent post. One of the reasons why ammonia is difficult to diffuse into the atmosphere as such is that ammonia easily reacts with moisture in air compared to other combustible gases such as a methane gas and a butane gas, reacts with moisture in the air to form ammonia water in the form of mist (droplets), and then has a higher specific gravity than the air.

On the other hand, Patent Document 2 discloses a recovery device that recovers ammonia from an exhaust gas. The recovery device disclosed in Patent Document 2 includes a dissolution tank which dissolves an exhaust gas into water and an ammonia water tank which stores ammonia water formed by the dissolution tank.

### Citation List

### Patent Document

Patent Document 1: Japanese Unexamined Patent Application, First Publication No. 2013-11332
Patent Document 2: Japanese Unexamined Patent Application, First Publication No. 2008-7378

### Summary of Invention

### Technical Problem

In the recovery device of Patent Document 2, high-purity ammonia is recovered by dehumidifying an ammonia gas, obtained by distilling ammonia water, and liquefying the ammonia gas and the water generated in the process of distilling the ammonia water is returned to a dissolution device in the previous process rather than the ammonia water tank. However, since an additional pipe installation space is required inside a hull in the ship in order to return the water generated in the process of distilling the ammonia water to the dissolution device, there is a problem that the ship increases in size. Further, the recovery device of Patent Document 2 requires thermal energy for regenerating ammonia.

Further, since the water returned to the dissolution device of Patent Document 2 contains a small amount of ammonia, the water from which ammonia has been separated cannot be released to the outside of the ship for reasons such as preventing marine pollution. For example, when the amount of the ammonia water inside the ammonia water tank exceeds an upper limit, ammonia contained in the water needs to be neutralized or diluted before being discharged to the outside of the ship. As a result, there is a problem that a neutralization or dilution device is separately required or the ammonia water tank needs to be increased in size.

The present disclosure has been made to solve the above-described problems and an object thereof is to provide a ship capable of saving energy and suppressing an increase in size of a hull while being able to recover ammonia as ammonia water and suppressing the recovered ammonia from being discharged to the outside of the ship.

### Solution to Problem

A ship according to the present disclosure includes: an ammonia recovery unit recovering ammonia absorbed into water as recovered ammonia water; a regeneration tower heating the recovered ammonia water and separating the recovered ammonia water into ammonia-removed water and ammonia vapor; a gas-liquid separation unit separating the ammonia vapor separated in the regeneration tower into an ammonia gas and a separated liquid; and a separated liquid reflux unit refluxing the separated liquid to the regeneration tower.

### Advantageous Effects of Invention

According to the ship of the above-described aspect, it is possible to save energy and suppress an increase in size of the hull while being able to recover ammonia as ammonia water and suppressing the recovered ammonia from being discharged to the outside of the ship.

### Brief Description of Drawings

FIG. 1 is a side view of a ship according to an embodiment of the present disclosure.
FIG. 2 is a diagram showing a piping system that performs fuel purge of the ship according to the embodiment of the present disclosure.
FIG. 3 is a diagram showing the piping system around a regeneration tower according to the embodiment of the present disclosure.
FIG. 4 is a diagram corresponding to FIG. 3 in a modified example of the embodiment of the present disclosure.

### Description of Embodiments

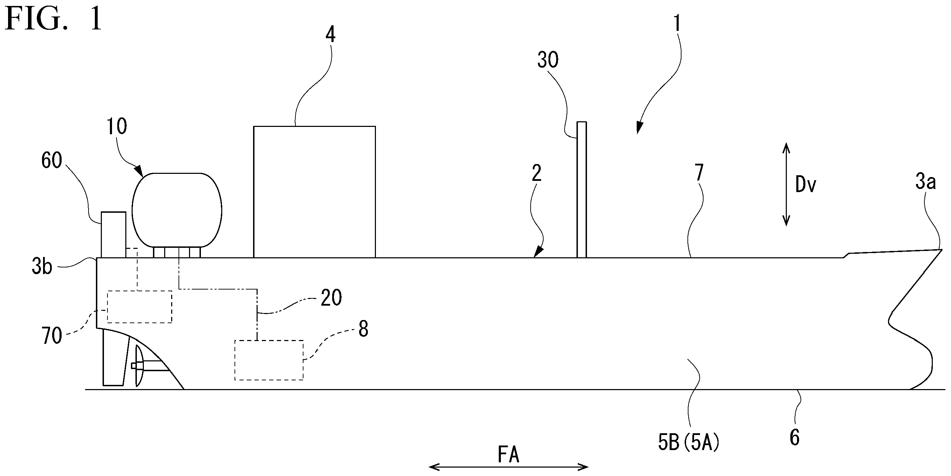

Hereinafter, a ship according to an embodiment of the present disclosure will be described with reference to the drawings. FIG. 1 is a side view of the ship according to the embodiment of the present disclosure.

### (Configuration of ship)

As shown in FIG. 1, a ship 1 of this embodiment includes a hull 2, a superstructure 4, a combustion device 8, an ammonia tank 10, a piping system 20, a vent post 30, an ammonia recovery unit 60, and a recovered ammonia water tank 70. The type of ship 1 is not limited to a specific type. Examples of the type of ship 1 include a liquefied gas carrier, a ferry, a RORO ship, a car carrier, a passenger ship, and the like.

The hull 2 includes a pair of sides 5A and 5B and a bottom 6 forming its outer shell. The sides 5A and 5B are provided with a pair of shell plates respectively forming the port and starboard sides. The bottom 6 includes a bottom shell plate that connects these sides 5A and 5B. Due to the pair of sides 5A and 5B and the bottom 6, the outer shell of the hull 2 is formed in a U shape in a cross-section orthogonal to a bow and stern direction FA.

The hull 2 further includes an upper deck 7 that is a full deck located at the uppermost level. The superstructure 4 is formed on this upper deck 7. Living areas and the like are provided inside the superstructure 4. In the ship 1 of this embodiment, for example, a cargo space (not shown) for loading cargo is provided closer to a bow 3a than the superstructure 4 in the bow and stern direction FA.

The combustion device 8 is a device that generates thermal energy by burning fuel and is provided inside the above-described hull 2. Examples of the combustion device 8 include an internal combustion engine which is used as a main engine for propelling the ship 1, an internal combustion engine which is used as a generator for supplying electricity inside the ship, a boiler which generates steam as a working fluid, and the like. The combustion device 8 of this embodiment uses ammonia (hereinafter, referred to as fuel ammonia) as fuel.

The ammonia tank 10 stores liquefied ammonia as fuel ammonia. The ammonia tank 10 illustrated in this embodiment is installed on the upper deck 7 closer to the stern 3b than the superstructure 4, but the arrangement of the ammonia tank 10 is not limited to the upper deck 7 closer to the stern 3b than the superstructure 4.

The piping system 20 connects the combustion device 8 and the ammonia tank 10. The piping system 20 supplies fuel ammonia stored in the ammonia tank 10 to the combustion device 8.

For example, the vent post 30 guides a gas such as a vent gas discharged from the cargo tank upward from the upper deck 7 and releases the gas into the atmosphere. The vent post 30 of this embodiment is provided on the upper deck 7 and extends upward from the upper deck 7. The vent post 30 has a cylindrical shape extending in the up to down direction Dv and is open at the top.

The ammonia recovery unit 60 absorbs ammonia to be recovered into water W and recovers the ammonia as the recovered ammonia water. The ammonia recovery unit 60 of this embodiment is disposed on the upper deck 7 closer to the stern 3b than the ammonia tank 10. As the ammonia recovery unit 60, for example, a so-called scrubber that injects water into a gas containing ammonia to absorb ammonia into water can be used. Water (for example, fresh water) stored in a water tank (not shown) provided inside the hull 2 is supplied to this ammonia recovery unit 60. Additionally, the ammonia recovery unit 60 is not limited to the above configuration or arrangement if the ammonia can be absorbed into water and recovered as the recovered ammonia water.

The recovered ammonia water tank 70 stores the recovered ammonia water recovered by the ammonia recovery unit 60. The recovered ammonia water tank 70 of this embodiment is disposed inside the hull 2 below the upper deck 7 on which the ammonia recovery unit 60 is installed. Additionally, the recovered ammonia water tank 70 is not limited to the above arrangement if the ammonia recovered by the ammonia recovery unit 60 can be recovered as the recovered ammonia water.

### (Configuration of piping system related to purge)

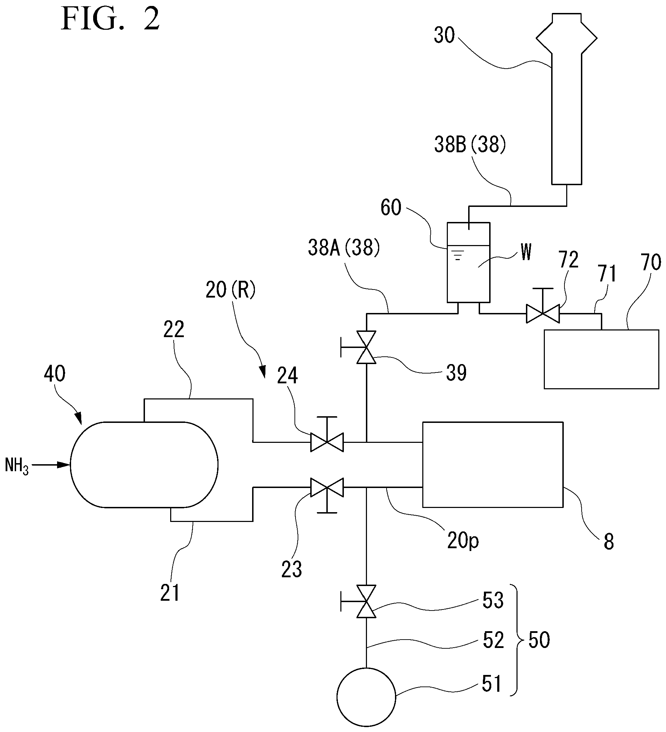

FIG. 2 is a diagram showing a piping system that performs fuel purge of the ship according to the embodiment of the present disclosure.

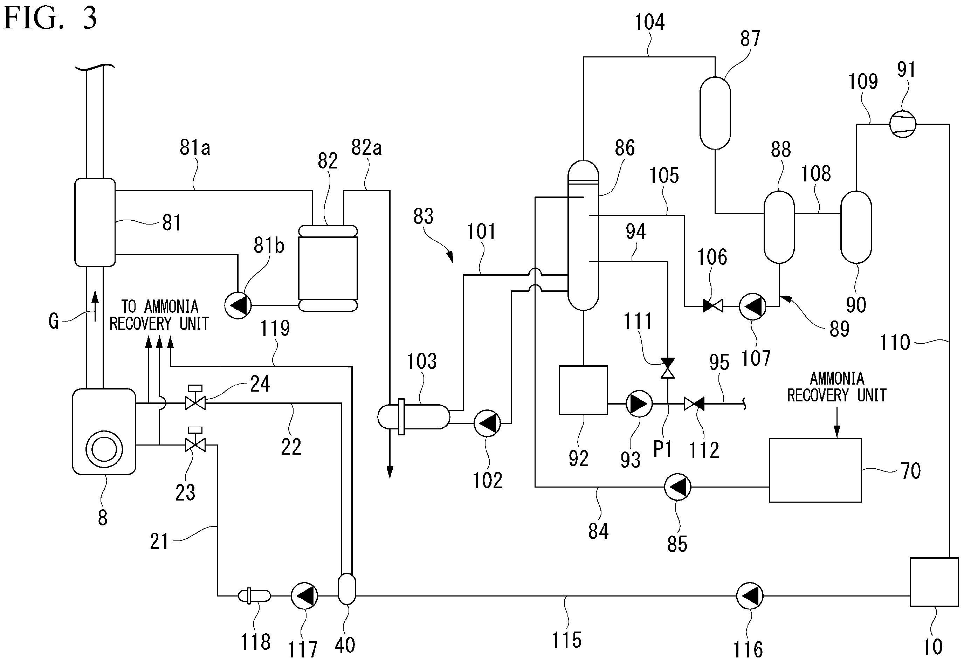

As shown in FIG. 2, the ship 1 of this embodiment includes an ammonia buffer tank 40 which temporarily stores the fuel ammonia supplied from the ammonia tank 10. The ammonia buffer tank 40 is installed in the middle of the piping system 20 between the ammonia tank 10 and the combustion device 8. Each piping system 20 includes a ammonia fuel supply line 115 (see FIG. 3), a supply pipe 21, a return pipe 22, and opening and closing valves 23 and 24 to be described later. Then, each of an inert gas supply device 50 and the ammonia recovery unit 60 is connected to this piping system 20.

The supply pipe 21 and the return pipe 22 respectively connect the ammonia buffer tank 40 and the combustion device 8. The supply pipe 21 supplies the fuel ammonia from the ammonia buffer tank 40 to the combustion device 8. The return pipe 22 returns excess fuel ammonia not used as fuel in the combustion device 8 to the ammonia buffer tank 40. Additionally, the supply pipe 21 is provided with an ammonia pressurizing pump 117 and an ammonia heat exchanger 118 (see FIG. 3) to be described later, but they are not shown in FIG. 2.

The opening and closing valve 23 is provided in the supply pipe 21. The opening and closing valve 24 is provided in the return pipe 22. These opening and closing valves 23 and 24 are always kept in an open state when the combustion device 8 is operated. On the other hand, the opening and closing valves 23 and 24 are always kept in a closed state when the combustion device 8 is stopped. When these opening and closing valves 23 and 24 are closed, the flow paths formed inside the supply pipe 21 and the return pipe 22 are blocked.

The inert gas supply device 50 performs so-called purge of replacing the fuel ammonia of the flow route R through which the fuel ammonia as the fuel of the combustion device 8 flows with an inert gas such as nitrogen. The inert gas supply device 50 includes an inert gas supply unit 51, an inert gas supply pipe 52, and an inert gas supply valve 53. As the inert gas, for example, an inert gas generated inside the hull 2 by an inert gas generator (not shown) or an inert gas stored in advance in an inert gas tank (not shown) provided in the hull 2 can be used. Additionally, the inert gas may be any gas that does not undergo a chemical reaction when the inert gas comes into contact with the fuel ammonia.

The inert gas supply unit 51 supplies an inert gas to the inert gas supply pipe 52.

The inert gas supply pipe 52 connects the inert gas supply unit 51 and the flow route R. More specifically, the inert gas supply pipe 52 connects the inert gas supply unit 51 and a purge target region 20p of the flow route R. The purge target region 20p of this embodiment is the flow route R formed inside the supply pipe 21 closer to the combustion device 8 than the opening and closing valve 23, the return pipe 22 closer to the combustion device 8 than the opening and closing valve 24, and the combustion device 8. The inert gas supply pipe 52 illustrated in this embodiment is connected to the purge target region 20p of the supply pipe 21 in the purge target region 20p.

The inert gas supply valve 53 is provided in the inert gas supply pipe 52. The inert gas supply valve 53 is normally closed and blocks the supply of the inert gas from the inert gas supply unit 51 to the purge target region 20p. Here, the normal time is when the fuel ammonia can be supplied to the combustion device 8 such as when the combustion device 8 is operated. In the normal state, the opening and closing valves 23 and 24 are opened, the fuel ammonia can be supplied from the ammonia buffer tank 40 to the combustion device 8 through the supply pipe 21, and excess fuel ammonia is returned from the combustion device 8 to the ammonia buffer tank 40.

The inert gas supply valve 53 is switched from a closed state to an open state when the combustion device 8 is stopped in an emergency or for a long period of time. In other words, the inert gas supply valve is operated from a closed state to an open state when purging the fuel ammonia remaining in the purge target region 20p. When performing such a purge, the opening and closing valves 23 and 24 are first closed to block the supply pipe 21 and the return pipe 22. Accordingly, the supply of the fuel ammonia from the ammonia buffer tank 40 to the combustion device 8 is stopped. Next, when the inert gas supply valve 53 is switched from a closed state to an open state, the inert gas can be supplied from the inert gas supply unit 51 to the purge target region 20p.

The vent pipe 38 guides the fuel ammonia remaining in the flow route R to the outside together with the inert gas supplied by the inert gas supply device 50. Since the fuel ammonia flows out to the vent pipe 38 together with the inert gas, the fuel ammonia in the purge target region 20p (flow route R) is replaced with the inert gas.

The vent pipe 38 of this embodiment includes an upstream vent pipe 38A and a downstream vent pipe 38B. The upstream vent pipe 38A connects the purge target region 20p of the recovery pipe 71 (flow route R) and the ammonia recovery unit 60. The upstream vent pipe 38A illustrated in this embodiment is connected to the return pipe 22. The downstream vent pipe 38B connects the ammonia recovery unit 60 and the vent post 30. That is, a mixed fluid of the inert gas and the fuel ammonia flows through the upstream vent pipe 38A and the remaining fluid from which the fuel ammonia is recovered by the ammonia recovery unit 60 flows through the downstream vent pipe 38B.

The ammonia recovery unit 60 of this embodiment is connected to the recovered ammonia water tank 70 through the recovery pipe 71. This recovery pipe 71 is provided with a recovery pipe opening and closing valve 72. The ammonia water generated in the ammonia recovery unit 60 moves to the recovered ammonia water tank 70 through the recovery pipe 71 when the recovery pipe opening and closing valve 72 is opened. In this embodiment, since the recovered ammonia water tank 70 is disposed below the ammonia recovery unit 60, the ammonia water generated by the ammonia recovery unit 60 can flow down to the recovered ammonia water tank 70 due to the own weight.

### (Configuration of removing ammonia from recovered ammonia water)

FIG. 3 is a diagram showing a piping system around a regeneration tower according to an embodiment of the present disclosure.

As shown in FIG. 3, the ship 1 of this embodiment further includes an exhaust gas economizer 81, a steam generation unit 82, a heater unit 83, a recovered ammonia water supply line 84, a recovered ammonia water feed pump 85, a regeneration tower 86, a condenser 87, a gas-liquid separation unit 88, a separated liquid reflux unit 89, an ammonia gas dehumidifier 90, an ammonia gas recovery and reuse unit 91, an ammonia-removed water tank 92, an ammonia-removed water feed pump 93, a removed water reflux line 94, and an overboard discharge line 95 as a configuration of removing the ammonia from the recovered ammonia water.

The exhaust gas economizer 81 recovers heat of an exhaust gas G of the combustion device 8. The exhaust gas economizer 81 of this embodiment is provided in the middle of the exhaust pipe that guides the exhaust gas G of the combustion device 8 to the outside of the ship. The exhaust gas economizer 81 recovers the heat of the exhaust gas G by exchanging heat between the exhaust gas G and the heat medium. The heat medium which exchanges heat with the exhaust gas G in the exhaust gas economizer 81 is supplied to the steam generation unit 82. The exhaust gas economizer 81 of this embodiment is connected to the steam generation unit 82 through a pipe 81a which circulates the heat medium. Further, the pipe 81a is provided with a pump 81b for circulating the heat medium.

The steam generation unit 82 generates steam from the heat recovered by the exhaust gas economizer 81. As the steam generation unit 82, a boiler or a steam separator can be employed. The steam which is generated by the steam generation unit 82 is supplied to a heater body 103 of the heater unit 83 through the steam supply pipe 82a.

The heater unit 83 heats the liquid stored in the lower part of the regeneration tower 86 by using the steam supplied from the steam generation unit 82. The heater unit 83 of this embodiment includes a circulation pipe 101 which can circulate the liquid stored in the lower part of the regeneration tower 86, a circulation pump 102 which is provided in the middle of the circulation pipe 101, and the heater body 103 which heats the liquid stored in the lower part of the regeneration tower 86 by exchanging heat between the steam supplied from the steam generation unit 82 and the liquid circulated by the circulation pipe 101.

The recovered ammonia water supply line 84 connects the recovered ammonia water tank 70 and the regeneration tower 86. The inside of the recovered ammonia water tank 70 and the inside of the regeneration tower 86 communicate with each other through the recovered ammonia water supply line 84. The recovered ammonia water supply line 84 of this embodiment is connected to the upper part of the regeneration tower 86.

The recovered ammonia water feed pump 85 is provided in the recovered ammonia water supply line 84. The recovered ammonia water feed pump 85 feeds the recovered ammonia water stored in the recovered ammonia water tank 70 to the regeneration tower 86.

The regeneration tower 86 separates the recovered ammonia water into ammonia-removed water and ammonia vapor by heating the recovered ammonia water. More specifically, the regeneration tower 86 heats the recovered ammonia water supplied through the recovered ammonia water supply line 84 by the heater unit 83 and separates the ammonia vapor from the recovered ammonia water by using a difference in boiling points between ammonia and water. Here, the ammonia-removed water means the remainder of the recovered ammonia water from which the ammonia vapor is separated in the regeneration tower 86. That is, the ammonia concentration of the ammonia-removed water is lower than the ammonia concentration of the recovered ammonia water. The ammonia-removed water may be mixed with newly supplied recovered ammonia water inside the regeneration tower 86.

The condenser 87 reduces the volume of the ammonia vapor by cooling the ammonia vapor separated by the regeneration tower 86. The condenser 87 is provided in the middle of an ammonia vapor line 104. One end of the ammonia vapor line 104 is connected to the upper portion of the regeneration tower 86 and the other end of the ammonia vapor line 104 is connected to the gas-liquid separation unit 88. That is, the condenser 87 condenses the ammonia vapor separated in the regeneration tower 86 while feeding the ammonia vapor to the gas-liquid separation unit 88. Additionally, the ammonia vapor supplied to the condenser 87 contains moisture.

The gas-liquid separation unit 88 separates the ammonia vapor into an ammonia gas and a separated liquid. The ammonia gas separated by the gas-liquid separation unit 88 is fed to the ammonia gas dehumidifier 90 through the ammonia gas supply line 108. Here, the separated liquid is the remainder obtained by separating the ammonia gas from the ammonia vapor. The separated liquid is water containing a small amount of ammonia. The gas-liquid separation by the gas-liquid separation unit 88 can be exemplified by a method of cooling ammonia vapor to be separated into a gas and a liquid, but the gas-liquid separation by the gas-liquid separation unit 88 is not limited to the method of cooling ammonia vapor.

The separated liquid reflux unit 89 refluxes the separated liquid obtained by the gas-liquid separation in the gas-liquid separation unit 88 to the regeneration tower 86. The separated liquid reflux unit 89 of this embodiment includes a reflux line 105, a reflux opening and closing valve 106, and a reflux pump 107. The reflux line 105 communicates the gas-liquid separation unit 88 and the regeneration tower 86. The reflux opening and closing valve 106 opens and closes a flow path formed inside the reflux line 105. The reflux pump 107 is provided in the reflux line 105 and pressure-feeds the separated liquid from the gas-liquid separation unit 88 to the regeneration tower 86.

The ammonia gas dehumidifier 90 dehumidifies the ammonia gas separated by the gas-liquid separation unit 88. The ammonia gas dehumidified by the ammonia gas dehumidifier 90 is fed to the ammonia gas recovery and reuse unit 91 through a dehumidified gas supply line 109. Here, since the ammonia gas separated by the gas-liquid separation unit 88 contains a slight amount of moisture, the ammonia gas dehumidifier 90 dehumidifies the ammonia gas before liquefying the ammonia gas. Additionally, when the humidity of the ammonia gas separated by the gas-liquid separation unit 88 is sufficiently low, the ammonia gas dehumidifier 90 may be omitted.

The ammonia gas recovery and reuse unit (ammonia gas liquefaction unit) 91 liquefies the ammonia gas and supplies the ammonia gas to the ammonia tank 10. The ammonia liquefied by the ammonia gas recovery and reuse unit 91 is fed to the ammonia tank 10 through the ammonia return line 110. In the ammonia gas recovery and reuse unit 91, for example, a method of increasing the pressure of the ammonia gas by a gas compressor (not shown) and cooling the ammonia gas by exchanging heat with sea water can be exemplified as a method of liquefying the ammonia gas. Further, the ammonia gas can also be liquefied by increasing the pressure of the ammonia gas using a gas compressor (not shown), expanding the pressure using an expansion valve (not shown), and then allowing the ammonia gas to flow into the ammonia tank 10 and contact the liquefied ammonia stored in the ammonia tank 10. Further, when the ship 1 includes, for example, a cargo tank as the ammonia gas recovery and reuse unit 91, a reliquefaction device (not shown) may be used to reliquefy a boil-off gas generated in the cargo tank.

The ammonia-removed water tank 92 stores the ammonia-removed water separated by the regeneration tower 86.

The removed water reflux line 94 forms a flow path for refluxing the ammonia-removed water stored in the ammonia-removed water tank 92 to the regeneration tower 86.

The ammonia-removed water feed pump 93 feeds the ammonia-removed water from the ammonia-removed water tank 92. The ammonia-removed water feed pump 93 of this embodiment is disposed in the vicinity of the ammonia-removed water tank 92 in the removed water reflux line 94.

The overboard discharge line 95 discharges the ammonia-removed water of the ammonia-removed water tank 92 to the outside of the ship. The overboard discharge line 95 of this embodiment branches from the removed water reflux line 94 closer to the regeneration tower 86 than the ammonia-removed water feed pump 93.

Here, an opening and closing valve 111 is provided in the removed water reflux line 94 to be closer to the regeneration tower 86 than a branch point P1 with the overboard discharge line 95. Further, the overboard discharge line 95 is provided with an opening and closing valve 112. The opening and closing valve 111 provided in the removed water reflux line 94 is kept open when the ammonia-removed water is refluxed from the ammonia-removed water tank 92 to the regeneration tower 86 and is kept closed when the ammonia-removed water is discharged from the ammonia-removed water tank 92 to the outside of the ship. Further, the opening and closing valve of the overboard discharge line 95 is kept closed when the ammonia-removed water is refluxed from the ammonia-removed water tank 92 to the regeneration tower 86 and is kept open when the ammonia-removed water is discharged from the ammonia-removed water tank 92 to the outside of the ship. In this embodiment, when the ammonia concentration of the ammonia-removed water stored in the ammonia-removed water tank 92 is such a concentration that the ammonia-removed water can be discharged to the outside of the ship, the ammonia-removed water is discharged to the outside of the ship. Then, when the ammonia concentration is such a concentration in which the ammonia-removed water cannot be discharged to the outside of the ship, the ammonia-removed water is refluxed to the regeneration tower to separate the ammonia vapor again.

Furthermore, in this embodiment, an ammonia fuel supply line 115 which connects the ammonia tank 10 and the ammonia buffer tank 40 is provided with a feed pump 116 which feeds the fuel ammonia to the combustion device 8.

Further, the supply pipe 21 of this embodiment is provided with the ammonia pressurizing pump 117 and the ammonia heat exchanger 118 not shown in FIG. 2. The ammonia pressurizing pump 117 pressurizes the fuel ammonia supplied from the ammonia buffer tank 40 to the combustion device 8. The ammonia heat exchanger 118 heats the fuel ammonia pressurized by the ammonia pressurizing pump 117. Additionally, the ammonia buffer tank 40 and the ammonia recovery unit 60 of this embodiment are connected by a buffer tank vent pipe 119 and the vent gas of the ammonia buffer tank 40 can be supplied to the ammonia recovery unit 60. Accordingly, the ammonia contained in the vent gas of the ammonia buffer tank 40 can also be recovered in the ammonia recovery unit 60.

### (Operation and effect)

The ship 1 of the above-described embodiment includes the ammonia recovery unit 60 which absorbs ammonia into water and recovers the ammonia as recovered ammonia water, the regeneration tower 86 which heats the recovered ammonia water to be separated into ammonia-removed water and ammonia vapor, the gas-liquid separation unit 88 which separates the ammonia vapor separated in the regeneration tower 86 into an ammonia gas and a separated liquid, and the separated liquid reflux unit 89 which refluxes the separated liquid to the regeneration tower 86.

According to such a ship 1, in the process of extracting the ammonia from the recovered ammonia water, the ammonia vapor is separated into the ammonia gas and the separated liquid by the gas-liquid separation unit 88, but this separated liquid can be refluxed to the regeneration tower 86, separating the recovered ammonia water into the ammonia-removed water and the ammonia vapor, to be processed again. Therefore, it is possible to reduce the installation space of the pipe inside the hull 2 compared to, for example, when the separated liquid is used as water for absorbing ammonia in the ammonia recovery unit 60. Further, since it is not required to discharge the separated liquid to the outside of the ship, a device for neutralizing or diluting the ammonia contained in the separated liquid is not required. Thus, it is possible to suppress an increase in size of the hull 2 while recovering the ammonia as the recovered ammonia water. Further, since it is possible to regenerate the ammonia by using the exhaust gas energy of the ship 1 from this recovered ammonia water, it is possible to save energy. Further, since it is possible to regenerate the ammonia by using the exhaust gas energy of the ship 1 from the recovered ammonia water, it is possible to suppress the recovered ammonia water from being discharged to the outside of the ship.

The ship 1 of the above-described embodiment further includes the ammonia tank 10 which is provided in the hull 2 and stores the fuel ammonia and the combustion device 8 which is driven by the fuel ammonia stored in the ammonia tank 10. Then, the regeneration tower 86 heats the recovered ammonia water by using the exhaust heat of the combustion device 8 and separates the recovered ammonia water into the ammonia-removed water and the ammonia vapor.

With such a configuration, in the ship 1 including the combustion device 8 of the main engine that uses ammonia as fuel, the exhaust heat of the combustion device 8 can be effectively used when separating the ammonia from the recovered ammonia water. Further, the separated ammonia can be used as fuel ammonia for the combustion device 8 or for other purposes (for example, as a reducing agent for a denitrification device).

The ship 1 of the above-described embodiment further includes the exhaust gas economizer 81 which recovers the heat of the exhaust gas of the combustion device 8, the steam generation unit 82 which generates steam from the heat recovered by the exhaust gas economizer 81, and the heater unit 83 which heats the liquid stored in the lower part of the regeneration tower 86 by using the steam generated by the steam generation unit 82.

With such a configuration, the heat recovered by the exhaust gas economizer 81 using the steam as a heat medium can be transmitted to the ammonia-removed water or the like which is a liquid stored in the lower part of the regeneration tower 86. Thus, when the ship 1 includes the exhaust gas economizer 81, the exhaust heat of the combustion device 8 can be easily used in the regeneration tower 86.

The ship 1 of the above-described embodiment further includes the ammonia gas recovery and reuse unit 91 which liquefies the ammonia gas separated by the gas-liquid separation unit 88 and supplies the ammonia gas to the ammonia tank 10.

With such a configuration, the ammonia tank 10 can be used as a tank for storing the ammonia extracted from the recovered ammonia water. Thus, a dedicated tank for storing ammonia liquefied in the ammonia gas recovery and reuse unit 91 can be omitted.

The ship 1 of the above-described embodiment further includes the condenser 87 which cools the ammonia vapor separated by the regeneration tower 86 and reduces the volume of the ammonia vapor.

With such a configuration, the gas-liquid separation process in the gas-liquid separation unit 88 can be efficiently performed.

The separated liquid reflux unit 89 of the ship 1 of the above-described embodiment includes the reflux line 105 which communicates the gas-liquid separation unit 88 and the regeneration tower 86 and the reflux pump 107 which pressure-feeds the separated liquid to the regeneration tower 86.

With such a configuration, the reflux pump 107 can actively feed the separated liquid separated by the gas-liquid separation unit 88 to the regeneration tower 86.

The ship 1 of the above-described embodiment further includes the recovered ammonia water tank 70 which stores the recovered ammonia water recovered by the ammonia recovery unit 60, the recovered ammonia water supply line 84 which connects the recovered ammonia water tank 70 and the regeneration tower 86, and the recovered ammonia water feed pump 85 which is provided in the recovered ammonia water supply line 84 and feeds the recovered ammonia water from the recovered ammonia water tank 70 to the regeneration tower 86.

With such a configuration, the recovered ammonia water recovered by the ammonia recovery unit 60 can be temporarily stored in the recovered ammonia water tank 70. Then, the recovered ammonia water stored in the recovered ammonia water tank 70 can be fed to the regeneration tower 86 by the recovered ammonia water feed pump 85. Thus, the process of separating the recovered ammonia water performed in the regeneration tower 86 can be reduced from being influenced by the generation status of the recovered ammonia water in the ammonia recovery unit 60.

The ship 1 of the above-described embodiment further includes the ammonia-removed water tank 92 which stores the ammonia-removed water separated by the regeneration tower 86, the ammonia-removed water feed pump 93 which feeds the ammonia-removed water from the ammonia-removed water tank 92, the removed water reflux line 94 which refluxes the ammonia-removed water of the ammonia-removed water tank 92 to the regeneration tower 86, and the overboard discharge line 95 which discharges the ammonia-removed water of the ammonia-removed water tank 92 to the outside of the ship.

With such a configuration, when the ammonia concentration of the ammonia-removed water is high, the ammonia-removed water can be refluxed to the regeneration tower 86 to separate the ammonia vapor again. Further, when the ammonia concentration of the ammonia-removed water decreases to a level in which the ammonia-removed water can be discharged to the sea, this ammonia-removed water can be discharged to the outside of the ship.

The ship 1 of the above-described embodiment further includes the inert gas supply device 50 which supplies an inert gas to a fuel flow path of the combustion device 8 and purges the fuel ammonia remaining in the fuel flow path. Then, the ammonia recovery unit 60 absorbs the purged fuel ammonia into water and recovers the fuel ammonia as the recovered ammonia water.

With such a configuration, the fuel ammonia purged using the inert gas can be used as the fuel ammonia for driving the combustion device 8. Thus, since it is possible to reduce the amount of the wasted fuel ammonia, it is possible to suppress an increase in size of the ammonia tank 10.

### <Modified example of embodiment

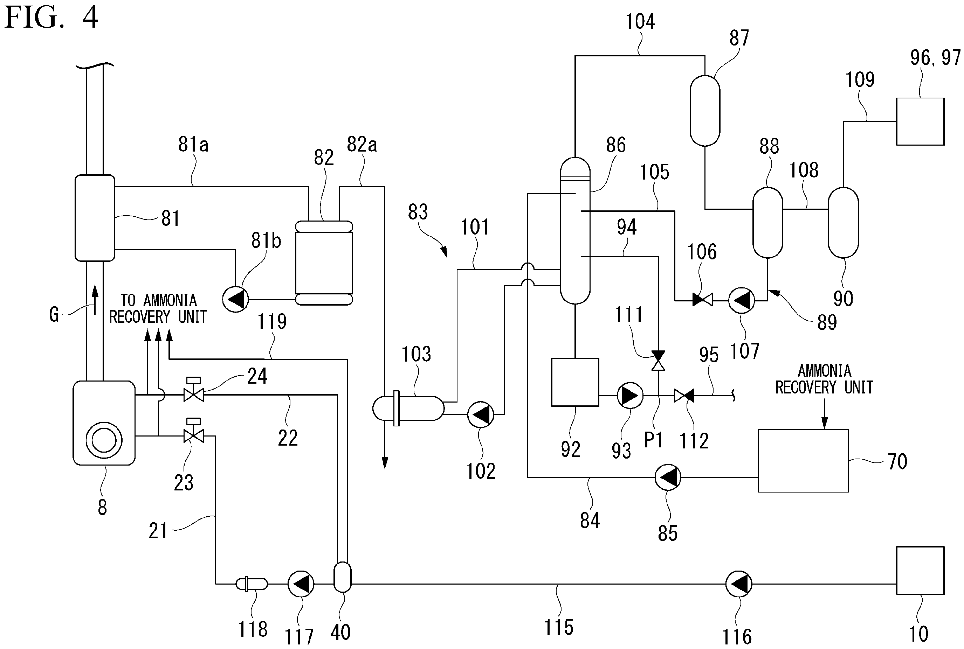

FIG. 4 is a diagram corresponding to FIG. 3 in a modified example of the embodiment of the present disclosure.

In the above-described embodiment, a case has been described in which the ammonia gas separated by the gas-liquid separation unit 88 and dehumidified by the ammonia gas dehumidifier 90 is liquefied by the ammonia gas recovery and reuse unit (ammonia gas liquefaction unit) 91 and is supplied to the ammonia tank 10. However, the feeding destination of the ammonia gas separated by the gas-liquid separation unit 88 and dehumidified by the ammonia gas dehumidifier 90 is not limited to the ammonia gas recovery and reuse unit (ammonia gas liquefaction unit) 91. For example, as shown in FIG. 4, the dehumidified gas supply line 109 may be connected to an ammonia reuse unit 96 or an ammonia incineration unit 97 instead of the ammonia gas recovery and reuse unit (ammonia gas liquefaction unit) 91. The ammonia reuse unit 96 reuses the ammonia gas fed through the dehumidified gas supply line 109. In the ammonia reuse unit 96, the ammonia gas may be reused as a gas or the ammonia gas may be reused after being pressurized or liquefied. Examples of the ammonia reuse unit 96 include a denitrification device and a hydrogen generator. The ammonia incineration unit 97 incinerates the ammonia gas fed through the dehumidified gas supply line 109 in a gaseous state.

According to the modified example of the above-described embodiment, the ammonia gas separated by the gas-liquid separation unit 88 can be reused in various ammonia reuse units 96 other than the combustion device 8 or can be incinerated by the ammonia incineration unit 97.

Additionally, in the modified example of the above-described embodiment, a case has been described in which either the ammonia reuse unit 96 or the ammonia incineration unit 97 is provided, but at least one of the ammonia reuse unit 96 and the ammonia incineration unit 97 may be provided. For example, both the ammonia reuse unit 96 and the ammonia incineration unit 97 may be provided. In this case, the connection destination of the dehumidified gas supply line 109 is switchable between the ammonia reuse unit 96 and the ammonia incineration unit 97 or the dehumidified gas supply line 109 may be branched and connected to each of the ammonia reuse unit 96 and the ammonia incineration unit 97 if necessary.

Further, at least two of the ammonia gas recovery and reuse unit (ammonia gas liquefaction unit) 91 of the first embodiment, the ammonia reuse unit 96 of the modified example, and the ammonia incineration unit 97 of the modified example may be provided. In this case, similarly to the above, the dehumidified gas supply line 109 may be connected to at least two of the ammonia gas recovery and reuse unit (ammonia gas liquefaction unit) 91, the ammonia reuse unit 96, and the ammonia incineration unit 97 or the dehumidified gas supply line 109 may be branched and connected to at least two of the ammonia gas recovery and reuse unit (ammonia gas liquefaction unit) 91, the ammonia reuse unit 96, and the ammonia incineration unit 97 if necessary.

### <Other embodiments>

Although the embodiment of the present disclosure has been described above with reference to the drawings, the detailed configuration is not limited to the embodiment and design changes and the like are also included in the present disclosure in the scope not departing from the spirit of the present disclosure.

In the above-described embodiment, a case has been described in which the ammonia recovered by the ammonia recovery unit 60 is the fuel ammonia purged from the flow route R of the combustion device 8. However, the ammonia recovered by the ammonia recovery unit 60 is not limited to the fuel ammonia purged from the flow route R. The ammonia recovered by the ammonia recovery unit 60 may be the ammonia used in the ship 1.

In the above-described embodiment, a case has been described in which the combustion device 8 is the main engine that uses ammonia as fuel. However, the combustion device 8 is not limited to a device that burns only ammonia and may be the combustion device 8 that can switch between ammonia and fuel (for example, heavy oil and the like) other than ammonia.

In the above-described embodiment, a case has been described in which the recovered ammonia water tank 70 is provided. However, the recovered ammonia water tank 70 may be omitted. In this case, the recovered ammonia water recovered by the ammonia recovery unit 60 may be introduced into the regeneration tower 86.

In the above-described embodiment, a case has been described in which the exhaust heat of the combustion device 8 is used in the regeneration tower 86, but thermal energy supplied from a heat source other than the combustion device 8 may be used.

Further, a case has been described in which steam is generated by using the heat recovered by the exhaust gas economizer 81, but a heat medium other than steam may be used.

In the above-described embodiment, a case has been described in which the separated liquid reflux unit 89 includes the reflux pump 107, but the present disclosure is not limited to the configuration including the reflux pump 107 if the separated liquid can be fed to the regeneration tower 86. For example, when the separated liquid can be moved to the regeneration tower 86 by its own weight, the reflux pump 107 may be omitted.

Similarly, in the above-described embodiment, a case has been described in which the recovered ammonia water feed pump 85 is provided in the recovered ammonia water supply line 84, but the recovered ammonia water feed pump 85 may be omitted if the recovered ammonia water can be fed to the regeneration tower 86.

In the above-described embodiment, a configuration has been described in which the ammonia-removed water can be refluxed to the regeneration tower 86, but the ammonia-removed water does not need to be refluxed to the regeneration tower 86 when the ammonia concentration of the ammonia-removed water is always such that the ammonia-removed water can be discharged into the ocean.

### <Appendix>

The ship 1 described in the embodiment is understood, for example, as below.
(1) According to a first aspect, the ship 1 includes: the ammonia recovery unit 60 recovering ammonia absorbed into water as recovered ammonia water; the regeneration tower 86 heating the recovered ammonia water and separating the recovered ammonia water into ammonia-removed water and ammonia vapor; the gas-liquid separation unit 88 separating the ammonia vapor separated by the regeneration tower 86 into an ammonia gas and a separated liquid; and a separated liquid reflux unit 89 refluxing the separated liquid to the regeneration tower 86.
   Accordingly, in the process of extracting the ammonia from the recovered ammonia water, the ammonia vapor is separated into the ammonia gas and the separated liquid by the gas-liquid separation unit 88, but this separated liquid can be refluxed to the regeneration tower 86, separating the recovered ammonia water into the ammonia-removed water and the ammonia vapor, to be processed again. Therefore, it is possible to reduce the installation space of the pipe inside the hull 2 compared to, for example, when the separated liquid is used as water for absorbing ammonia in the ammonia recovery unit 60. Further, since it is not required to discharge the separated liquid to the outside of the ship, a device for neutralizing or diluting the ammonia contained in the separated liquid is not required. Thus, it is possible to suppress an increase in size of the hull 2 while recovering the ammonia as the recovered ammonia water.
(2) The ship 1 according to a second aspect is the ship of (1) further including: the ammonia tank 10 which is installed on the hull and storing the ammonia; and the combustion device 8 which is driven by the ammonia stored in the ammonia tank 10, wherein the regeneration tower 86 heats the recovered ammonia water by using the exhaust heat of the combustion device 8 and separates the recovered ammonia water into the ammonia-removed water and the ammonia vapor.

Examples of the combustion device 8 include an internal combustion engine and a boiler respectively used in a main engine and a generator.

Accordingly, in the ship 1 including the combustion device 8 that uses ammonia as fuel, the exhaust heat of the combustion device 8 can be effectively used when separating the ammonia from the recovered ammonia water. Further, the separated ammonia can be used as the fuel ammonia of the combustion device 8.

(3) The ship 1 according to a third aspect is the ship of (2) further including: the exhaust gas economizer 81 recovering the heat of the exhaust gas of the combustion device 8; the steam generation unit 82 generating steam by the heat recovered by the exhaust gas economizer 81; and the heater unit 83 heating a liquid stored in the lower part of the regeneration tower 86 by using the steam generated by the steam generation unit 82.

Accordingly, the heat recovered by the exhaust gas economizer 81 by using the steam as a heat medium can be transmitted to the liquid stored in the lower part of the regeneration tower 86. Thus, when the ship 1 includes the exhaust gas economizer 81, the exhaust heat of the combustion device 8 can be easily used in the regeneration tower 86.

(4) The ship 1 according to a fourth aspect is the ship of (2) or (3) further including: the inert gas supply device 50 supplying an inert gas to the fuel flow path of the combustion device 8 to purge the fuel ammonia remaining in the fuel flow path, wherein the ammonia recovery unit 60 absorbs the purged fuel ammonia into water and recovers the fuel ammonia as recovered ammonia.

Accordingly, the fuel ammonia purged using the inert gas can be used as the fuel ammonia for driving the combustion device 8. Thus, since it is possible to reduce the amount of the wasted fuel ammonia, it is possible to suppress an increase in size of the ammonia tank 10.

(5) The ship 1 according to a fifth aspect is the ship of (2) to (4) further including: the ammonia gas recovery and reuse unit 91 liquefying the ammonia gas separated by the gas-liquid separation unit 88 and supplying the ammonia gas to the ammonia tank 10.

Accordingly, the ammonia tank 10 can be used as a tank for storing the ammonia extracted from the recovered ammonia water. Thus, a dedicated tank for storing ammonia liquefied in the ammonia gas recovery and reuse unit 91 can be omitted.

(6) The ship 1 according to a sixth aspect is the ship of (2) to (4) further including: at least one of the ammonia reuse unit 96 reusing the ammonia gas separated by the gas-liquid separation unit 88 and the ammonia incineration unit 97 incinerating the ammonia gas separated by the gas-liquid separation unit 88.

Accordingly, the ammonia gas separated by the gas-liquid separation unit 88 can be reused by the ammonia reuse unit 96 or can be incinerated by the ammonia incineration unit 97.

(7) The ship 1 according to a seventh aspect is the ship of any one of (1) to (6) further including: the condenser 87 cooling the ammonia vapor separated by the regeneration tower 86 to reduce the volume of the ammonia vapor.

Accordingly, the gas-liquid separation process in the gas-liquid separation unit 88 can be efficiently performed.

(8) The ship 1 according to an eighth aspect is the ship of any one of (1) to (7), wherein the separated liquid reflux unit 89 includes the reflux line communicating the gas-liquid separation unit 88 and the regeneration tower 86 and the reflux pump 107 pressure-feeding the separated liquid to the regeneration tower 86.

Accordingly, the reflux pump 107 can actively feed the separated liquid separated by the gas-liquid separation unit 88 to the regeneration tower 86.

(9) The ship 1 according to a ninth aspect is the ship of any one of (1) to (8) further including: the recovered ammonia water tank 70 storing the recovered ammonia water recovered by the ammonia recovery unit 60; the recovered ammonia water supply line 84 connecting the recovered ammonia water tank 70 and the regeneration tower 86; and the recovered ammonia water feed pump 85 which is installed on the recovered ammonia water supply line 84 and feeding the recovered ammonia water from the recovered ammonia water tank 70 to the regeneration tower 86.

Accordingly, the recovered ammonia water recovered by the ammonia recovery unit 60 can be temporarily stored in the recovered ammonia water tank 70. Then, the recovered ammonia water stored in the recovered ammonia water tank 70 can be fed to the regeneration tower 86 by the recovered ammonia water feed pump 85. Thus, the process of separating the recovered ammonia water performed in the regeneration tower 86 can be reduced from being influenced by the generation status of the recovered ammonia water in the ammonia recovery unit 60.

(10) The ship 1 according to a tenth aspect is the ship of any one of (1) to (9) further including: the ammonia-removed water tank 92 storing the ammonia-removed water separated by the regeneration tower 86; the ammonia-removed water feed pump 93 feeding the ammonia-removed water from the ammonia-removed water tank 92; the removed water reflux line 94 refluxing the ammonia-removed water of the ammonia-removed water tank 92 to the regeneration tower 86; and the overboard discharge line 95 discharging the ammonia-removed water of the ammonia-removed water tank 92 to the outside of the ship.

Accordingly, when the ammonia concentration of the ammonia-removed water is high, the ammonia-removed water can be refluxed to the regeneration tower 86 to separate the ammonia vapor again. Further, when the ammonia concentration of the ammonia-removed water decreases to a level in which the ammonia-removed water can be discharged to the sea, this ammonia-removed water can be discharged to the outside of the ship.

### Industrial Applicability

According to the present disclosure, it is possible to save energy and suppress an increase in size of the hull while recovering ammonia as ammonia water and suppressing the recovered ammonia from being discharged to the outside of the ship.

### Reference Signs List

1 Ship
2 Hull
4 Superstructure
5A, 5B Side
6 Bottom
7 Upper deck
8 Combustion device
10 Ammonia tank
20 Piping system
20p Purge target region
21 Supply pipe
22 Return pipe
23, 24 Opening and closing valve
30 Vent post
38 Vent pipe
38A Upstream vent pipe
38B Downstream vent pipe
40 Ammonia buffer tank
50 Inert gas supply device
51 Inert gas supply unit
52 Inert gas supply pipe
53 Inert gas supply valve
60 Ammonia recovery unit
70 Recovered ammonia water tank
71 Recovery pipe
72 Recovery pipe opening and closing valve
80 Exhaust pipe
81 Exhaust gas economizer
81a Pipe
81b Pump
82 Steam generation unit
82a Steam supply pipe
83 Heater unit
84 Recovered ammonia water supply line
85 Recovered ammonia water feed pump
86 Regeneration tower
87 Condenser
88 Gas-liquid separation unit
89 Separated liquid reflux unit
90 Ammonia gas dehumidifier
91 Ammonia gas recovery and reuse unit
92 Ammonia-removed water tank
93 Ammonia-removed water feed pump
94 Removed water reflux line
95 Overboard discharge line
96 Ammonia reuse unit
97 Ammonia incineration unit
101 Circulation pipe
102 Circulation pump
103 Heater body
104 Ammonia vapor line
105 Reflux line
106 Reflux opening and closing valve
107 Reflux pump
108 Ammonia gas supply line
109 Dehumidified gas supply line
110 Ammonia return line
111, 112 Opening and closing valve
115 Ammonia fuel supply line
116 Feed pump
117 Ammonia pressurizing pump
118 Ammonia heat exchanger
119 Buffer tank vent pipe
G Exhaust gas
R Flow route

## Claims

1. A ship comprising:
an ammonia recovery unit recovering ammonia absorbed into water as recovered ammonia water;
a regeneration tower heating the recovered ammonia water and separating the recovered ammonia water into ammonia-removed water and ammonia vapor;
a gas-liquid separation unit separating the ammonia vapor separated in the regeneration tower into an ammonia gas and a separated liquid; and
a separated liquid reflux unit refluxing the separated liquid to the regeneration tower.

2. The ship according to claim 1, further comprising:
an ammonia tank which is installed on a hull and storing the ammonia; and
a combustion device which is driven by the ammonia stored in the ammonia tank,
wherein the regeneration tower heats the recovered ammonia water using exhaust heat of the combustion device and separates the recovered ammonia water into the ammonia-removed water and the ammonia vapor.

3. The ship according to claim 2, further comprising:
an exhaust gas economizer recovering heat of an exhaust gas of the combustion device;
a steam generation unit generating steam by the heat recovered by the exhaust gas economizer; and
a heater unit heating a liquid stored in a lower part of the regeneration tower by using the steam generated by the steam generation unit.

4. The ship according to claim 2 or 3, further comprising:
an inert gas supply device supplying an inert gas to a fuel flow path of the combustion device to purge fuel ammonia remaining in the fuel flow path,
wherein the ammonia recovery unit absorbs the purged fuel ammonia into water and recovers the fuel ammonia as recovered ammonia.

5. The ship according to any one of claims 2 to 4, further comprising:
an ammonia gas recovery and reuse unit liquefying the ammonia gas separated by the gas-liquid separation unit and supplying the ammonia gas to the ammonia tank.

6. The ship according to any one of claims 2 to 4, further comprising:
at least one of an ammonia reuse unit reusing the ammonia gas separated by the gas-liquid separation unit and an ammonia incineration unit incinerating the ammonia gas separated by the gas-liquid separation unit.

7. The ship according to any one of claims 1 to 6, further comprising:
a condenser cooling the ammonia vapor separated by the regeneration tower to reduce the volume of the ammonia vapor.

8. The ship according to any one of claims 1 to 7,
wherein the separated liquid reflux unit includes a reflux line communicating the gas-liquid separation unit and the regeneration tower and a reflux pump pressure-feeding the separated liquid to the regeneration tower.

9. The ship according to any one of claims 1 to 8, further comprising:
a recovered ammonia water tank storing the recovered ammonia water recovered by the ammonia recovery unit;
a recovered ammonia water supply line connecting the recovered ammonia water tank and the regeneration tower; and
a recovered ammonia water feed pump which is installed on the recovered ammonia water supply line and feeding the recovered ammonia water from the recovered ammonia water tank to the regeneration tower.

10. The ship according to any one of claims 1 to 9, further comprising:
an ammonia-removed water tank storing the ammonia-removed water separated by the regeneration tower;
an ammonia-removed water feed pump feeding the ammonia-removed water from the ammonia-removed water tank;
a removed water reflux line refluxing the ammonia-removed water of the ammonia-removed water tank to the regeneration tower; and
an overboard discharge line discharging the ammonia-removed water of the ammonia-removed water tank to the outside of the ship.
